# FASCICULE DE BREVET EUROPEEN

(11) **EP 2 529 902 B1**
(45) Date de publication et mention de la délivrance du brevet: **01.07.2015**
(21) Numéro de dépôt: 12170106.4
(22) Date de dépôt: 30.05.2012
(51) Int. Cl.: B26D 1/00, B26D 3/22, A47J 43/25

(54) **Outil de coupe d'aliments en morceaux**
Instrument zum In-Stücke-Schneiden von Lebensmitteln
Tool for cutting food into pieces

(30) Priorité: 01.06.2011 FR 1154847
(43) Date de publication de la demande: 05.12.2012
(73) Titulaire: SEB S.A., 69130 Ecully (FR)
(72) Inventeur: Bordes, Jean-Luc, 65100 Ade (FR); Noguez, Jean-Michel, 65100 Lourdes (FR); Peyras, Lionel, 65100 Lourdes (FR)
(74) Mandataire: Cémeli, Eric Philippe Laurent

(56) Documents cités:
- BE-A- 701 603
- DE-U1- 9 017 306
- DE-U1-202009 001 755
- DE-U1-202010 002 865
- US-A- 1 936 180
- US-B1- 6 766 731

## Description

La présente invention concerne le domaine technique de la découpe des aliments en morceaux.

La présente invention concerne notamment la découpe d'aliments en bâtonnets ou en filaments, pour obtenir des frites ou une julienne de légumes.

La présente invention se rapporte aux outils de coupe d'aliments en morceaux, aux accessoires de préparation d'aliments prévus pour la découpe d'aliments en morceaux et aux appareils de préparation d'aliments prévus pour la découpe d'aliments en morceaux. Un tel dispositif est connu du document US 1,936,180.

Un but de la présente invention est de proposer un outil de coupe du type précité qui présente une construction robuste tout en permettant une réalisation économique.

Un autre but de la présente invention est de proposer un accessoire de préparation d'aliments comportant un outil de coupe du type précité qui présente une construction robuste tout en permettant une réalisation économique.

Un autre but de la présente invention est de proposer un appareil de préparation d'aliments comportant un outil de coupe du type précité qui présente une construction robuste tout en permettant une réalisation économique.

Ces buts sont atteints avec un outil de coupe d'aliments en morceaux comportant au moins un élément de coupe adjacent à une surface d'appui prévue pour un déplacement relatif de l'aliment à découper par rapport à l'élément de coupe, l'élément de coupe comportant une paroi transversale s'étendant à distance de la surface d'appui, l'élément de coupe comprenant au moins un montant issu de la paroi transversale, ledit montant formant un organe de coupe longitudinale prévu pour fendre les aliments à découper, la paroi transversale présentant de part et d'autre dudit montant deux organes de coupe transversale prévus pour détacher les morceaux d'aliments fendus, ledit montant ménageant deux passages d'aliments découpés avec la paroi transversale et la surface d'appui, du fait que ledit montant présente une encoche frontale, l'organe de coupe longitudinale étant agencé entre la paroi transversale et l'encoche frontale, un organe de retenue solidaire de la surface d'appui étant engagé dans l'encoche frontale. Cette disposition permet de mieux maintenir la distance entre la surface d'appui et les organes de coupe transversale. Les risques de déformation et/ou de soulèvement de l'élément de coupe par un aliment dur sont fortement réduits, voire supprimés. La géométrie des passages d'aliments découpés est plus facilement conservée sans nécessiter la réalisation d'éléments de coupe particulièrement rigides et/ou tranchants.

Selon une forme de réalisation avantageuse, l'organe de retenue appartient à un élément d'appui formant au moins partiellement la surface d'appui. L'aliment en cours de découpe peut ainsi glisser sur la surface d'appui jusqu'au montant. Cette disposition permet de réduire la longueur du montant entre l'encoche frontale et la paroi transversale, augmentant ainsi la rigidité du montant. En alternative, l'élément d'appui pourrait notamment être monté sur une paroi de l'outil de coupe d'aliments en morceaux opposée à la surface d'appui.

Selon une forme de réalisation avantageuse, l'élément de coupe est solidaire d'un corps d'outil. En alternative, l'élément de coupe pourrait notamment être issu d'un corps d'outil ou être monté amovible par rapport à un corps d'outil.

L'élément de coupe peut alors être fixé au corps d'outil au moyen de rivets. En alternative, le corps d'outil pourrait notamment être surmoulé sur l'élément de coupe.

Selon une forme de réalisation avantageuse, l'organe de retenue est solidaire du corps d'outil. En alternative, l'organe de retenue pourrait notamment être issu d'un corps d'outil, voire être monté amovible par rapport à un corps d'outil en étant solidaire de l'élément de coupe associé.

L'organe de retenue peut alors être fixé au corps d'outil au moyen de rivets. En alternative, le corps d'outil pourrait notamment être surmoulé sur l'organe de retenue.

Avantageusement alors, le corps d'outil forme au moins partiellement la surface d'appui. Cette disposition permet de réduire la taille de l'élément de coupe et/ou de l'organe de retenue.

Avantageusement alors, le corps d'outil est réalisé en matière plastique. Cette disposition autorise une grande liberté de forme pour la réalisation du corps d'outil.

Selon un mode de réalisation, l'outil de coupe d'aliments en morceaux comporte un organe d'entraînement en rotation. L'outil de coupe d'aliments en morceaux présente alors avantageusement une configuration cylindrique, tronconique, ou en forme de disque. En alternative, l'outil de coupe d'aliments en morceaux pourrait comporter un organe d'entraînement en translation, pour appartenir à un appareil de type mandoline électrique, voire être dépourvu d'organe d'entraînement, pour appartenir à un appareil de type mandoline.

Avantageusement alors, l'organe d'entraînement en rotation est réalisé dans le corps d'outil. Cette disposition permet de simplifier la réalisation de l'outil de coupe d'aliments en morceaux.

Avantageusement alors, l'outil de coupe d'aliments en morceaux présente une paroi tronconique ou cylindrique entourant une paroi de fond présentant l'organe d'entraînement en rotation, l'élément de coupe étant agencé à l'extérieur de la paroi tronconique ou cylindrique. Dans ce type de configuration, les organes de coupe transversale présentent une trajectoire incurvée et exercent un effort d'arrachage sur les aliments à découper. Un aliment particulièrement dur ou résistant peut ainsi contribuer à soulever les organes de coupe transversale. L'organe de retenue engagé dans l'encoche frontale ménagée dans le montant permet de contrecarrer l'effort de soulèvement exercé par l'aliment. La rigidification de l'élément de coupe est améliorée. Un outil de coupe particulièrement robuste présentant une géométrie tronconique ou cylindrique peut ainsi être envisagé.

Avantageusement encore, l'élément de coupe comprend au moins deux montants présentant chacun une encoche frontale, l'organe de retenue étant engagé dans les encoches frontales. Ainsi un même organe de retenue est utilisé pour au moins deux montants. Cette disposition permet de simplifier la réalisation de l'outil de coupe tout en améliorant la solidité de la construction.

Ces buts sont atteints également avec un accessoire de préparation d'aliments prévu pour la découpe d'aliments en morceaux, comprenant un magasin logeant un outil de coupe d'aliments en morceaux comportant au moins un élément de coupe ménageant au moins deux passages d'aliments découpés adjacents à une surface d'appui, le magasin présentant une ouverture d'introduction d'aliments débouchant en regard de la surface d'appui et une sortie d'évacuation d'aliments découpés communiquant avec les passages d'aliments découpés, du fait que l'outil de coupe d'aliments en morceaux est conforme à l'une au moins des caractéristiques précitées.

Ces buts sont atteints également avec un appareil de préparation d'aliments prévu pour la découpe d'aliments en morceaux, comportant un magasin logeant un outil de coupe d'aliments en morceaux comportant au moins un élément de coupe ménageant au moins deux passages d'aliments découpés adjacents à une surface d'appui, le magasin présentant une ouverture d'introduction d'aliments débouchant en regard de la surface d'appui et une sortie d'évacuation d'aliments découpés communiquant avec les passages d'aliments découpés, l'appareil comportant des moyens d'entraînement prévus pour déplacer l'outil de coupe d'aliments en morceaux de sorte que l'élément de coupe balaye l'ouverture d'introduction d'aliments, si désiré par l'intermédiaire de moyens de transmission, du fait que l'outil de coupe d'aliments en morceaux est conforme à l'une au moins des caractéristiques précitées.

Selon une forme de réalisation avantageuse, le magasin est monté amovible sur un boîtier moteur, les moyens d'entraînement appartenant au boîtier moteur, le magasin présentant des moyens de transmission venant en prise avec les moyens d'entraînement lorsque le magasin est monté sur le boîtier moteur, les moyens de transmission étant aptes à entraîner l'outil de coupe d'aliments en morceaux mis en place dans le magasin.

L'invention sera mieux comprise à l'étude d'un exemple de réalisation, pris à titre nullement limitatif, illustré dans les figures annexées, dans lesquelles :
- la figure 1 est une vue en perspective d'un exemple de réalisation d'un outil de coupe d'aliments en morceaux selon l'invention,
- la figure 2 est une vue éclatée en perspective de l'outil de coupe d'aliments en morceaux illustré sur la figure 1,
- la figure 3 est une vue en perspective d'un exemple de réalisation d'un accessoire de préparation d'aliments comportant l'outil de coupe d'aliments en morceaux illustré sur les figures 1 et 2,
- la figure 4 est une vue en perspective d'un exemple de réalisation d'un appareil de préparation d'aliments comportant l'accessoire de préparation d'aliments illustré sur la figure 3.

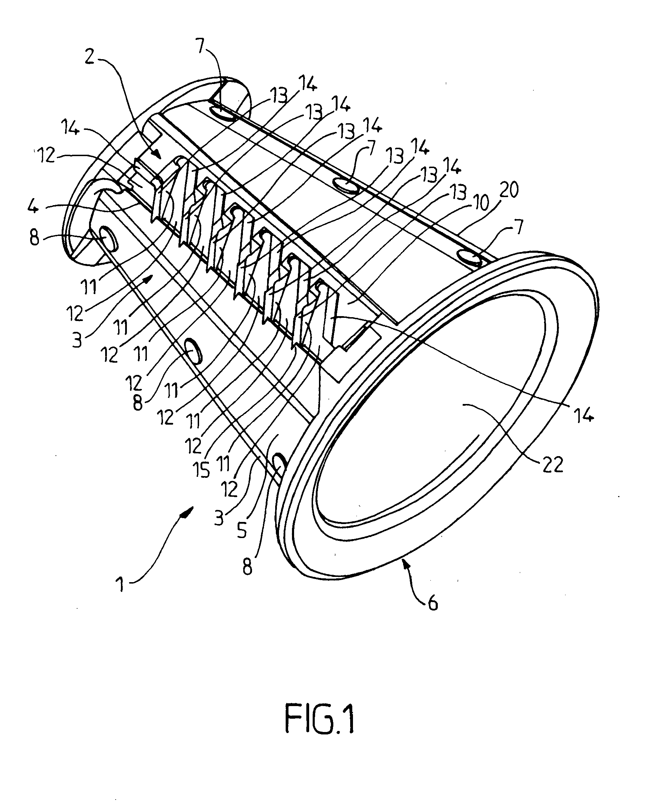

L'outil de coupe d'aliments en morceaux 1 illustré sur la figure 1 présente une géométrie tronconique et est prévu pour être entraîné en rotation. L'invention n'est toutefois pas limitée aux outils de coupe de géométrie tronconique, mais concerne également les outils de coupe fixes, les outils de coupe entraînés en translation, ou encore les outils de coupe entraînés en rotation présentant une géométrie cylindrique ou circulaire.

L'outil de coupe d'aliments en morceaux 1 illustré sur la figure 1 comporte au moins un élément de coupe 2 adjacent à une surface d'appui 3. La surface d'appui 3 est prévue pour un déplacement relatif de l'aliment à découper par rapport à l'élément de coupe 2. Un organe de retenue 4 est solidaire de la surface d'appui 3.

L'élément de coupe 2 comprend une paroi transversale 10 s'étendant à distance de la surface d'appui. L'élément de coupe 2 comprend au moins un montant 11 issu de la paroi transversale 10. Ledit montant 11 ménage deux passages d'aliments découpés 12 avec la paroi transversale 10 et la surface d'appui 3. A cet effet, ledit montant 11 forme un organe de coupe longitudinale 13 prévu pour fendre les aliments à découper, et la paroi transversale 10 présente de part et d'autre dudit montant 11 deux organes de coupe transversale 14 prévus pour détacher les morceaux d'aliments fendus.

Dans l'exemple de réalisation illustré sur la figure 1, l'organe de retenue 4 appartient à un élément d'appui 5 formant au moins partiellement la surface d'appui 3. L'élément de coupe 2 est solidaire d'un corps d'outil 6. Le corps d'outil 6 forme au moins partiellement la surface d'appui 3. Le corps d'outil 6 est avantageusement réalisé en matière plastique.

Plus particulièrement, l'élément de coupe 2 est fixé au corps d'outil 6 au moyen de rivets 7. L'organe de retenue 4 est solidaire du corps d'outil 6. Plus particulièrement, l'organe de retenue 4 est fixé au corps d'outil 6 au moyen de rivets 8.

L'outil de coupe d'aliments en morceaux 1 présente une paroi tronconique 20 appartenant au corps d'outil 6. L'élément de coupe 2 est agencé à l'extérieur de la paroi tronconique 20.

L'élément de coupe 2 illustré sur les figures comprend six montants 11 issus de la paroi transversale 10. Les six montants 11 ménagent sept passages d'aliments découpés 12. La paroi transversale 10 comporte sept organes de coupe transversale 14. Ainsi deux montants 11 adjacents sont séparés par un organe de coupe transversale 14.

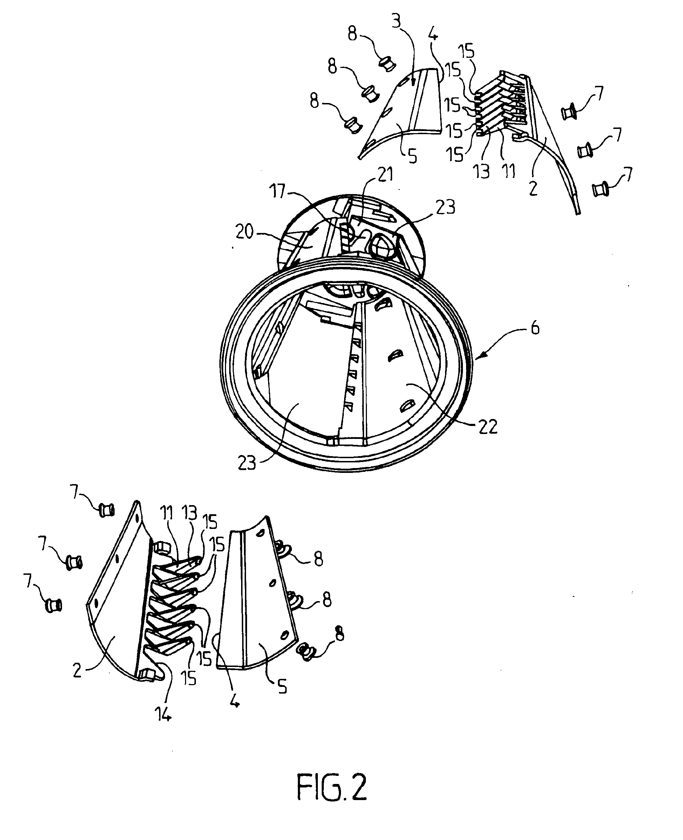

Tel que mieux visible sur la figure 2, chacun des montants 11 présente une encoche frontale 15. L'organe de retenue 4 solidaire de la surface d'appui 3 est engagé dans l'encoche frontale 15 de chaque montant 11. Si désiré, un léger serrage de l'organe de retenue 4 peut être exercé par les encoches frontales 15.

Ainsi l'élément de coupe 2 comprend au moins deux montants 11 présentant chacun une encoche frontale 15, l'organe de retenue 4 étant engagé dans les encoches frontales 15.

L'organe de coupe longitudinale 13 de chaque montant 11 est agencé entre la paroi transversale 10 et l'encoche frontale 15. Tel que représenté sur la figure 1, l'organe de retenue 4 est engagé dans l'encoche frontale 15 de chaque montant 11. La largeur de coupe définie par les organes de coupe transversale 14 est supérieure à la hauteur de coupe définie par les organes de coupe longitudinale 13. Les encoches frontales 15 permettent de réaliser des ancrages limitant la déformation de la paroi transversale 10, notamment au niveau des raccordements entre les montants 11 et la paroi transversale 10.

Tel que visible sur la figure 2, l'outil de coupe d'aliments en morceaux 1 comporte deux éléments de coupe 2 associés chacun à un organe de retenue 4 appartenant à un élément d'appui 5. Le corps d'outil 6 présente une paroi de fond 21 reliée à la paroi tronconique 20. La paroi tronconique 20 ménage une ouverture d'évacuation d'aliments découpés 22. La paroi tronconique 20 présente des ouvertures 23 agencées en regard des passages d'aliments découpés 12. La paroi tronconique 20, les éléments de coupe 2 et les éléments d'appui 5 comportent des perforations prévues pour le montage des rivets 7, 8.

L'outil de coupe d'aliments en morceaux 1 comporte un organe d'entraînement en rotation 17. Dans l'exemple de réalisation illustré sur les figures, l'organe d'entraînement en rotation 17 est réalisé dans le corps d'outil 6, plus particulièrement dans la paroi de fond 21. L'organe d'entraînement en rotation 17 est par exemple formé par une ouverture en étoile centrée dans la paroi de fond 21.

Si désiré, les organes de coupe longitudinale 13 peuvent s'étendre perpendiculairement à l'axe de rotation de l'outil de coupe d'aliments en morceaux 1 et présenter un mouvement dans un plan. Les organes de coupe transversale 14 présentent un mouvement de révolution autour de l'axe de rotation de l'outil de coupe d'aliments en morceaux 1. Le mouvement des organes de coupe transversale 14 s'inscrit dans une trajectoire tronconique ou cylindrique, tous les organes de coupe transversale 14 ne présentant pas nécessairement la même inclinaison par rapport à l'axe de rotation de l'outil de coupe d'aliments en morceaux 1.

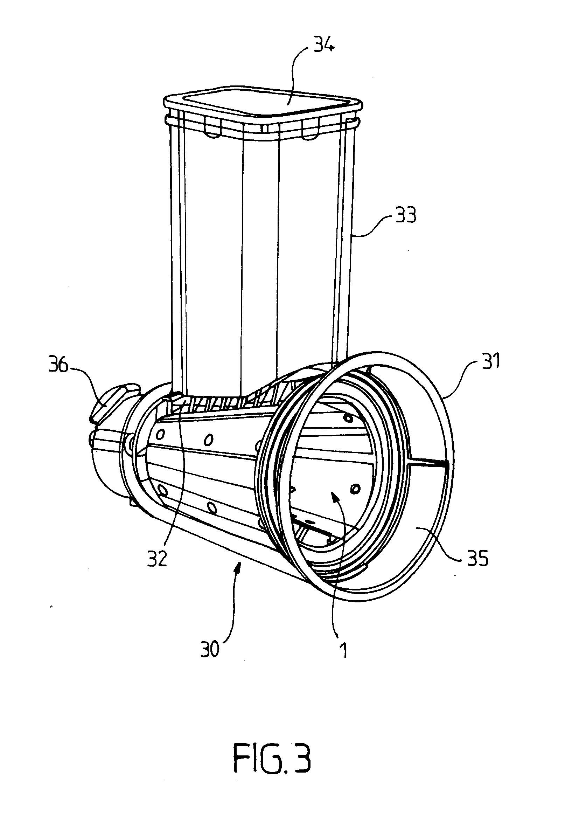

La figure 3 illustre un accessoire de préparation d'aliments 30 prévu pour la découpe d'aliments en morceaux.

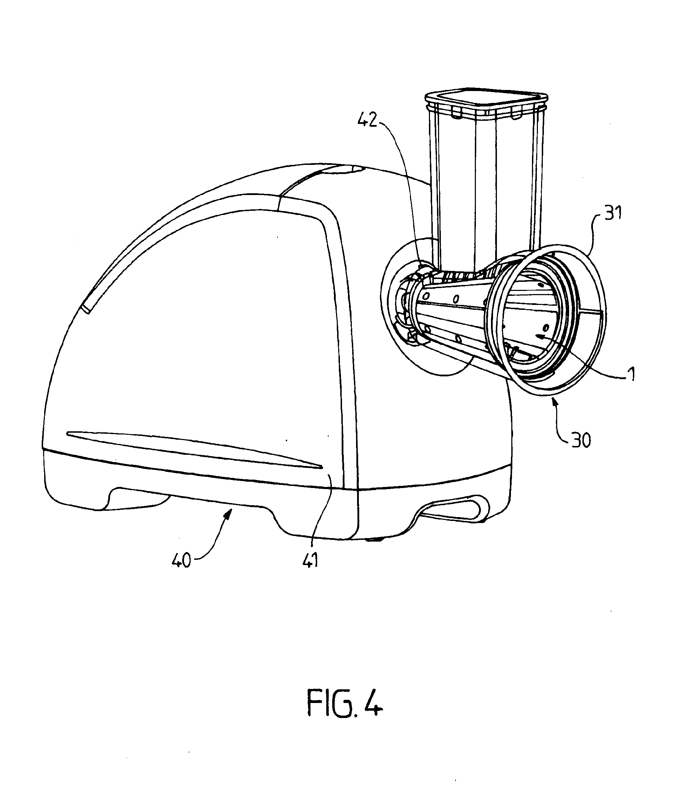

La figure 4 illustre un appareil de préparation d'aliments 40 prévu pour la découpe d'aliments en morceaux, comportant l'accessoire de préparation d'aliments 30.

L'accessoire de préparation d'aliments 30 comprend un magasin 31 logeant un outil de coupe d'aliments en morceaux 1 comportant au moins un élément de coupe 2 ménageant au moins deux passages d'aliments découpés 12 adjacents à une surface d'appui 3.

Le magasin 31 représenté sur les figures 3 et 4 est avantageusement réalisé en matériau transparent.

Tel que montré sur la figure 3, le magasin 31 présente une ouverture d'introduction d'aliments 32 formée par une goulotte 33. La goulotte 33 peut recevoir un poussoir 34. L'ouverture d'introduction d'aliments 32 débouche en regard de la surface d'appui 3. Le magasin 31 présente une sortie d'évacuation d'aliments découpés 35. La sortie d'évacuation d'aliments découpés 35 communique avec les passages d'aliments découpés 12.

Tel que montré sur la figure 4, le magasin 31 est monté amovible sur un boîtier moteur 41. Le magasin 31 et le boîtier moteur 41 présentent à cet effet des moyens d'accrochage 36, 42 par exemple de type à baïonnette. Le boîtier moteur 41 comporte un moteur électrique relié électriquement à des moyens de commande et mécaniquement à des moyens d'entraînement prévus pour entraîner la partie rotative de l'accessoire de préparation d'aliments 30, non représentés sur les figures. Les moyens d'entraînement appartiennent au boîtier moteur 41. Le magasin 31 présente des moyens de transmission, non représentés sur les figures, venant en prise avec les moyens d'entraînement lorsque le magasin 31 est monté sur le boîtier moteur 41. Les moyens de transmission sont aptes à entraîner l'outil de coupe d'aliments en morceaux 1 mis en place dans le magasin 31, par l'intermédiaire de l'organe d'entraînement en rotation 17. La partie rotative de l'accessoire de préparation d'aliments 30 comporte l'outil de coupe d'aliments en morceaux 1 ainsi que les moyens de transmission.

A titre de variante, le magasin 31 pourrait être intégré au boîtier moteur 41. Les moyens de transmission ne sont alors plus nécessaires, les moyens d'entraînement pouvant entraîner directement l'organe d'entraînement en rotation 17.

L'appareil de préparation d'aliments 40 comporte ainsi des moyens d'entraînement prévus pour déplacer l'outil de coupe d'aliments en morceaux 1 de sorte que l'élément de coupe 2 balaye l'ouverture d'introduction d'aliments 32, si désiré par l'intermédiaire de moyens de transmission.

L'appareil de préparation d'aliments 40, l'accessoire de préparation d'aliments 30 et l'outil de coupe d'aliments en morceaux 1 fonctionnent et s'utilisent de la manière suivante.

L'utilisateur introduit un aliment tel que par exemple une pomme de terre dans la goulotte 33. L'aliment peut venir au contact de la surface d'appui 3 de l'outil de coupe d'aliments en morceaux 1. La mise en marche de l'appareil de préparation d'aliments 40 entraîne la rotation de l'outil de coupe d'aliments en morceaux 1. L'aliment est bloqué latéralement dans l'ouverture d'introduction d'aliments 32. Les organes de coupe longitudinale 13 fendent la partie inférieure de l'aliment et les organes de coupe transversale 14 détachent les parties fendues du reste de l'aliment. L'organe de retenue 4 inséré dans les encoches frontales 15 permet d'éviter les déformations de l'élément de coupe 2. La longévité de l'outil de coupe d'aliments en morceaux 1 peut ainsi être améliorée.

A titre de variante, l'organe de retenue 4 n'est pas nécessairement engagé dans toutes les encoches frontales 15. Plusieurs organes de retenue 4 peuvent être utilisés si désiré.

A titre de variante, tous les montants 11 ne présentent pas nécessairement une encoche frontale 15 ; au moins un montant 11 présente une encoche frontale 15.

A titre de variante, l'outil de coupe d'aliments en morceaux 1 peut présenter une configuration cylindrique au lieu d'une configuration tronconique. La paroi de fond est alors entourée par une paroi cylindrique.

A titre de variante, l'outil de coupe d'aliments en morceaux 1 ne présente pas nécessairement une configuration tronconique ou cylindrique, mais peut par exemple présenter une configuration en forme de disque dans laquelle les organes de coupe transversale 14 sont mis en mouvement dans un plan autour de l'axe de rotation de l'outil de coupe d'aliments en morceaux 1.

A titre de variante, l'outil de coupe d'aliments en morceaux 1 n'est pas nécessairement entraîné en rotation, mais peut par exemple être entraîné en translation rectiligne selon un mouvement alternatif dans un appareil de type mandoline électrique.

A titre de variante, l'outil de coupe d'aliments en morceaux 1 n'est pas nécessairement entraîné, mais peut par exemple appartenir à un appareil de type mandoline comportant un élément de retenue d'aliments prévu pour être déplacé en translation par rapport à l'élément de coupe.

La présente invention n'est nullement limitée à l'exemple de réalisation décrit et à ses variantes, mais englobe de nombreuses modifications dans le cadre des revendications.

## Revendications

1. Outil de coupe d'aliments en morceaux (1), comportant au moins un élément de coupe (2) adjacent à une surface d'appui (3) prévue pour un déplacement relatif de l'aliment à découper par rapport à l'élément de coupe (2), l'élément de coupe (2) comportant une paroi transversale (10) s'étendant à distance de la surface d'appui (3), l'élément de coupe (2) comprenant au moins un montant (11) issu de la paroi transversale (10), ledit montant (11) formant un organe de coupe longitudinale (13) prévu pour fendre les aliments à découper, la paroi transversale (10) présentant de part et d'autre dudit montant (11) deux organes de coupe transversale (14) prévus pour détacher les morceaux d'aliments fendus, ledit montant (11) ménageant deux passages d'aliments découpés (12) avec la paroi transversale (10) et la surface d'appui (3), **caractérisé en ce que** ledit montant (11) présente une encoche frontale (15), **en ce que** l'organe de coupe longitudinale (13) est agencé entre la paroi transversale (10) et l'encoche frontale (15), et **en ce qu'**un organe de retenue (4) solidaire de la surface d'appui (3) est engagé dans l'encoche frontale (15).

2. Outil de coupe d'aliments en morceaux selon la revendication 1, **caractérisé en ce que** l'organe de retenue (4) appartient à un élément d'appui (5) formant au moins partiellement la surface d'appui (3).

3. Outil de coupe d'aliments en morceaux selon l'une des revendications 1 ou 2, **caractérisé en ce que** l'élément de coupe (2) est solidaire d'un corps d'outil (6).

4. Outil de coupe d'aliments en morceaux selon la revendication 3, **caractérisé en ce que** l'élément de coupe (2) est fixé au corps d'outil (6) au moyen de rivets (7).

5. Outil de coupe d'aliments en morceaux selon l'une des revendications 3 ou 4, **caractérisé en ce que** l'organe de retenue (4) est solidaire du corps d'outil (6).

6. Outil de coupe d'aliments en morceaux selon la revendication 5, **caractérisé en ce que** l'organe de retenue (4) est fixé au corps d'outil (6) au moyen de rivets (8).

7. Outil de coupe d'aliments en morceaux selon l'une des revendications 3 à 6, **caractérisé en ce que** le corps d'outil (6) forme au moins partiellement la surface d'appui (3).

8. Outil de coupe d'aliments en morceaux selon l'une des revendications 3 à 7, **caractérisé en ce que** le corps d'outil (6) est réalisé en matière plastique.

9. Outil de coupe d'aliments en morceaux selon l'une des revendications 1 à 8, **caractérisé en ce qu'**il comporte un organe d'entraînement en rotation (17).

10. Outil de coupe d'aliments en morceaux selon la revendication 9 et l'une des revendications 3 à 8, **caractérisé en ce que** l'organe d'entraînement en rotation (17) est réalisé dans le corps d'outil (6).

11. Outil de coupe d'aliments en morceaux selon l'une des revendications 9 ou 10, **caractérisé en ce qu'**il présente une paroi tronconique ou cylindrique (20) entourant une paroi de fond (21) présentant l'organe d'entraînement en rotation (17), l'élément de coupe (2) étant agencé à l'extérieur de la paroi tronconique ou cylindrique (20).

12. Outil de coupe d'aliments en morceaux selon l'une des revendications 1 à 11, **caractérisé en ce que** l'élément de coupe (2) comprend au moins deux montants (11) présentant chacun une encoche frontale (15), et **en ce que** l'organe de retenue (4) est engagé dans les encoches frontales (15).

13. Accessoire de préparation d'aliments (30) prévu pour la découpe d'aliments en morceaux, comprenant un magasin (31) logeant un outil de coupe d'aliments en morceaux (1) comportant au moins un élément de coupe (2) ménageant au moins deux passages d'aliments découpés (12) adjacents à une surface d'appui (3), le magasin (31) présentant une ouverture d'introduction d'aliments (32) débouchant en regard de la surface d'appui (3) et une sortie d'évacuation d'aliments découpés (35) communiquant avec les passages d'aliments découpés (12), **caractérisé en ce que** l'outil de coupe d'aliments en morceaux (1) est conforme à l'une des revendications 1 à 12.

14. Appareil de préparation d'aliments (40) prévu pour la découpe d'aliments en morceaux, comprenant un magasin (31) logeant un outil de coupe d'aliments en morceaux (1) comportant au moins un élément de coupe (2) ménageant au moins deux passages d'aliments découpés (12) adjacents à une surface d'appui (3), le magasin (31) présentant une ouverture d'introduction d'aliments (32) débouchant en regard de la surface d'appui (3) et une sortie d'évacuation d'aliments découpés (35) communiquant avec les passages d'aliments découpés (12), l'appareil comportant des moyens d'entraînement prévus pour déplacer l'outil de coupe d'aliments en morceaux (1) de sorte que l'élément de coupe (2) balaye l'ouverture d'introduction d'aliments (32), si désiré par l'intermédiaire de moyens de transmission, **caractérisé en ce que** l'outil de coupe d'aliments en morceaux (1) est conforme à l'une des revendications 1 à 12.

15. Appareil de préparation d'aliments selon la revendication 14, **caractérisé en ce que** le magasin (31) est monté amovible sur un boîtier moteur (41), les moyens d'entraînement appartenant au boîtier moteur (41), le magasin (31) présentant des moyens de transmission venant en prise avec les moyens d'entraînement lorsque le magasin (31) est monté sur le boîtier moteur (41), les moyens de transmission étant aptes à entraîner l'outil de coupe d'aliments en morceaux (1) mis en place dans le magasin (31).

## Patentansprüche

1. Werkzeug (1) zum Schneiden von Nahrungsmitteln in Stücke mit zumindest einem Schneidelement (2), das an eine Stützfläche (3) angrenzt, die für eine relative Bewegung des zu schneidenden Nahrungsmittels zum Schneidelement (2) vorgesehen ist, wobei das Schneidelement (2) eine Querwand (10) umfasst, die sich beabstandet von der Stützfläche (3) erstreckt, wobei das Schneidelement (2) zumindest einen Schenkel (11) umfasst, der aus der Querwand (10) hervorgeht, wobei der genannte Schenkel (11) ein Längsschneidelement (13) bildet, das für das Zerteilen der zu schneidenden Nahrungsmittel vorgesehen ist, wobei die Querwand (10) zu beiden Seiten des genannten Schenkels (11) zwei Querschneidelemente (14) aufweist, die für das Lösen der zerteilten Nahrungsmittelstücke vorgesehen ist, wobei der genannte Schenkel (11) mit der Querwand (10) und der Stützfläche (3) zwei Durchlässe (12) für geschnittene Nahrungsmittel ausbildet, **dadurch gekennzeichnet, dass** der genannte Schenkel (11) eine vordere Einkerbung (15) aufweist, dass das Längsschneidelement (13) zwischen der Querwand (10) und der vorderen Einkerbung (15) angeordnet ist und dass ein mit der Stützfläche (3) fest verbundenes Rückhalteelement (4) in der vorderen Einkerbung (15) sitzt.

2. Werkzeug zum Schneiden von Nahrungsmitteln in Stücke nach Anspruch 1, **dadurch gekennzeichnet, dass** das Rückhalteelement (4) zu einem Stützelement (5) gehört, das zumindest teilweise die Stützfläche (3) bildet.

3. Werkzeug zum Schneiden von Nahrungsmitteln in Stücke nach einem der Ansprüche 1 oder 2, **dadurch gekennzeichnet, dass** das Schneidelement (2) mit einem Werkzeugkörper (6) fest verbunden ist.

4. Werkzeug zum Schneiden von Nahrungsmitteln in Stücke nach Anspruch 3, **dadurch gekennzeichnet, dass** das Schneidelement (2) mit Nieten (7) am Werkzeugkörper (6) befestigt ist.

5. Werkzeug zum Schneiden von Nahrungsmitteln in Stücke nach einem der Ansprüche 3 oder 4, **dadurch gekennzeichnet, dass** das Rückhalteelement (4) mit dem Werkzeugkörper (6) fest verbunden ist.

6. Werkzeug zum Schneiden von Nahrungsmitteln in Stücke nach Anspruch 5, **dadurch gekennzeichnet, dass** das Rückhalteelement (4) mit Nieten (8) am Werkzeugkörper (6) befestigt ist.

7. Werkzeug zum Schneiden von Nahrungsmitteln in Stücke nach einem der Ansprüche 3 bis 6, **dadurch gekennzeichnet, dass** der Werkzeugkörper (6) zumindest teilweise die Stützfläche (3) bildet.

8. Werkzeug zum Schneiden von Nahrungsmitteln in Stücke nach einem der Ansprüche 3 bis 7, **dadurch gekennzeichnet, dass** der Werkzeugkörper (6) aus Kunststoff hergestellt ist.

9. Werkzeug zum Schneiden von Nahrungsmitteln in Stücke nach einem der Ansprüche 1 bis 8, **dadurch gekennzeichnet, dass** es ein Drehantriebselement (17) umfasst.

10. Werkzeug zum Schneiden von Nahrungsmitteln in Stücke nach Anspruch 9 und einem der Ansprüche 3 bis 8, **dadurch gekennzeichnet, dass** das Drehantriebselement (17) in dem Werkzeugkörper (6) ausgeführt ist.

11. Werkzeug zum Schneiden von Nahrungsmitteln in Stücke nach einem der Ansprüche 9 oder 10, **dadurch gekennzeichnet, dass** es eine kegelstumpfförmige oder zylindrische Wand (20) aufweist, die eine Rückwand (21) umschließt, die das Drehantriebselement (17) aufweist, wobei das Schneidelement (2) auf der Außenseite der kegelstumpfförmigen oder zylindrischen Wand (20) angeordnet ist.

12. Werkzeug zum Schneiden von Nahrungsmitteln in Stücke nach einem der Ansprüche 1 bis 11, **dadurch gekennzeichnet, dass** das Schneidelement (2) zumindest zwei Schenkel (11) umfasst, die jeweils eine vordere Einkerbung (15) aufweisen, und dass das Rückhalteelement (4) in den vorderen Einkerbungen (15) sitzt.

13. Zubehörteil (30) zur Zubereitung von Nahrungsmitteln, das für das Schneiden von Nahrungsmitteln in Stücke vorgesehen ist, mit einem Magazin (31), das ein Werkzeug (1) zum Schneiden von Nahrungsmitteln in Stücke aufnimmt, das zumindest ein Schneidelement (2) umfasst, das zumindest zwei Durchlässe (12) für geschnittene Nahrungsmittel ausbildet, die an eine Stützfläche (3) angrenzen, wobei das Magazin (31) eine Öffnung (32) zum Einführen von Nahrungsmitteln, die gegenüber der Stützfläche (3) einmündet, und einen Auslass (35) für geschnittene Nahrungsmittel aufweist, der mit den Durchlässen (12) für geschnittene Nahrungsmittel in Verbindung steht, **dadurch gekennzeichnet, dass** das Werkzeug (1) zum Schneiden von Nahrungsmitteln in Stücke einem der Ansprüche 1 bis 12 entspricht.

14. Gerät (40) zur Zubereitung von Nahrungsmitteln, das für das Schneiden von Nahrungsmitteln in Stücke vorgesehen ist, mit einem Magazin (31), das ein Werkzeug (1) zum Schneiden von Nahrungsmitteln in Stücke aufnimmt, das zumindest ein Schneidelement (2) umfasst, das zumindest zwei Durchlässe (12) für geschnittene Nahrungsmittel ausbildet, die an eine Stützfläche (3) angrenzen, wobei das Magazin (31) eine Öffnung (32) zum Einführen von Nahrungsmitteln, die gegenüber der Stützfläche (3) einmündet, und einen Auslass (35) für geschnittene Nahrungsmittel aufweist, der mit den Durchlässen (12) für geschnittene Nahrungsmittel in Verbindung steht, wobei das Gerät Antriebsmittel umfasst, die derart für die Bewegung des Werkzeugs (1) zum Schneiden von Nahrungsmitteln in Stücke vorgesehen sind, dass das Schneidelement (2), wenn gewünscht, durch Übertragungsmittel über die Öffnung (32) zum Einführen von Nahrungsmitteln, schleift, **dadurch gekennzeichnet, dass** das Werkzeug (1) zum Schneiden von Nahrungsmitteln in Stücke einem der Ansprüche 1 bis 12 entspricht.

15. Gerät zur Zubereitung von Nahrungsmitteln nach Anspruch 14, **dadurch gekennzeichnet, dass** das Magazin (31) abnehmbar auf einem Motorgehäuse (41) montiert ist, wobei die Antriebsmittel zum Motorgehäuse (41) gehören, wobei das Magazin (31) Übertragungsmittel aufweist, die mit den Antriebsmitteln in Eingriff kommen, wenn das Magazin (31) auf das Motorgehäuse (41) montiert wird, wobei die Übertragungsmittel dafür ausgelegt sind, das in das Magazin (31) eingesetzte Werkzeug (1) zum Schneiden von Nahrungsmitteln in Stücke anzutreiben.

## Claims

1. Tool for cutting food into pieces (1) comprising at least one cutting element (2) adjacent to a bearing surface (3) provided for a relative movement of the food to be cut with respect to the cutting element (2), the cutting element (2) having a transverse wall (10) extending away from the bearing surface (3), the cutting element (2) comprising at least one upright (11) from the transverse wall (10), said upright (11) forming a longitudinal cutting member (13) provided for splitting the food to be cut, the transverse wall (10) having on either side of said upright (11) two transverse cutting members (14) provided for separating the pieces of split food, said upright (11) providing two cut food passages (12) with the transverse wall (10) and the bearing surface (3), **characterised in that** said upright (11) has a front notch (15), **in that** the longitudinal cutting member (13) is arranged between the transverse wall (10) and the front notch (15), and **in that** a retaining member (4) integral with the bearing surface (3) is engaged in the front notch (15).

2. Tool for cutting food into pieces according to claim 1, **characterised in that** the retaining member (4) belongs to a bearing element (5) forming at least partially the bearing surface (3).

3. Tool for cutting food into pieces according to claim 1 or 2, **characterised in that** the cutting element (2) is integral with a tool body (6).

4. Tool for cutting food into pieces according to claim 3, **characterised in that** the cutting element (2) is attached to the tool body (6) by means of rivets (7).

5. Tool for cutting food into pieces according to claim 3 or 4, **characterised in that** the retaining member (4) is integral with the tool body (6).

6. Tool for cutting food into pieces according to claim 5, **characterised in that** the retaining member (4) is attached to the tool body (6) by means of rivets (8).

7. Tool for cutting food into pieces according to one of claims 3 to 6, **characterised in that** the tool body (6) forms at least partially the bearing surface (3).

8. Tool for cutting food into pieces according to one of claims 3 to 7, **characterised in that** the tool body (6) is made of plastic.

9. Tool for cutting food into pieces according to one of claims 1 to 8, **characterised in that** it comprises a rotary drive member (17).

10. Tool for cutting food into pieces according to claim 9 and one of claims 3 to 8, **characterised in that** the rotary drive member (17) is formed in the tool body (6).

11. Tool for cutting food into pieces according to claim 9 or 10, **characterised in that** it has a frustoconical or cylindrical wall (20) surrounding a bottom wall (21) having the rotary drive member (17), the cutting element (2) being arranged outside of the frustoconical or cylindrical wall (20).

12. Tool for cutting food into pieces according to one of claims 1 to 11, **characterised in that** the cutting element (2) comprises at least two uprights (11) each having a front notch (15), and **in that** the retaining member (4) is engaged in the front notches (15).

13. Food preparation accessory (30) intended for cutting food into pieces, comprising a magazine (31) accommodating a tool for cutting food into pieces (1) having at least one cutting element (2) providing at least two cut food passages (12) adjacent to a bearing surface (3), the magazine (31) having a food inlet opening (32) opening out opposite the bearing surface (3) and a cut food discharge outlet (35) communicating with the cut food passages (12), **characterised in that** the tool for cutting food into pieces (1) is according to one of claims 1 to 12.

14. Food preparation appliance (40) intended for cutting food into pieces, comprising a magazine (31) accommodating a tool for cutting food into pieces (1) having at least one cutting element (2) providing at least two cut food passages (12) adjacent to a bearing surface (3), the magazine (31) having a food inlet opening (32) opening out opposite the bearing surface (3) and a cut food discharge outlet (35) communicating with the cut food passages (12), the appliance comprising drive means provided for moving the tool for cutting food into pieces (1) so that the cutting element (2) sweeps the food inlet opening (32), if required via transmission means, **characterised in that** the tool for cutting food into pieces (1) is according to one of claims 1 to 12.

15. Food preparation appliance according to claim 14, **characterised in that** the magazine (31) is removably mounted on a motor housing (41), the drive means belonging to the motor housing (41), the magazine (31) having transmission means engaging with the drive means when the magazine (31) is mounted on the motor housing (41), the transmission means being adapted to drive the tool for cutting food into pieces (1) placed in the magazine (31).
